Europäisches Patentamt

European Patent Office

Office européen des brevets

(11) Publication number: **0 189 524 B1**

# EUROPEAN PATENT SPECIFICATION

(45) Date of publication of patent specification: **13.07.94**   (51) Int. Cl.⁵: **G06F 7/48**, G06F 15/64

(21) Application number: **85112469.3**

(22) Date of filing: **02.10.85**

(54) **Memory unit having arithmetic and logic functions, in particular for graphic processing.**

(30) Priority: **05.10.84 JP 208266/84**
**20.05.85 JP 105850/84**

(43) Date of publication of application:
**06.08.86 Bulletin 86/32**

(45) Publication of the grant of the patent:
**13.07.94 Bulletin 94/28**

(84) Designated Contracting States:
**DE FR GB**

(56) References cited:
**GB-A- 2 103 399**
**US-A- 3 976 982**
**US-A- 3 984 670**

**PATENTS ABSTACTS OF JAPAN, vol. 7, no. 228 (P-228)[1373], 8th October 1983; & JP-A-58 115 673 (FUJITSU K.K.) 09-07-1983**

**PATENTS ABSTRACTS OF JAPAN, vol. 7, no. 238 (P-231)[1383], 22nd October 1983; & JP-A-58 125 281 (FUJITSU K.K.) 26-07-1983**

**PATENTS ABSTRACTS OF JAPAN, vol. 8, no. 214 (P-304)[1651], 29th September 1984; JP-A-59 95 669 (TOSHIBA K.K.) 01-06-1984**

(73) Proprietor: **HITACHI, LTD.**
**6, Kanda Surugadai 4-chome**
**Chiyoda-ku, Tokyo 100(JP)**

(72) Inventor: **Kimura, Koichi**
**643-1, Nakatacho**
**Totsuka-ku Yokohama(JP)**
Inventor: **Ogura, Toshihiko**
**2113, Kamiimaizumi**
**Ebina-shi(JP)**
Inventor: **Aotsu, Hiroaki**
**1122, Shimokuratacho**
**Totsuka-ku Yokohama(JP)**
Inventor: **Ikegami, Mitsuru**
**2882-6, Mukohara**
**Yamakitamachi**
**Ashigarakami-gun Kanagawa-ken(JP)**
Inventor: **Kuwabara, Tadashi**
**Asahiryo 304**
**1545, Yoshidacho**
**Totsuka-ku Yokohama(JP)**

(74) Representative: **Patentanwälte Beetz - Timpe - Siegfried Schmitt-Fumian - Mayr**
**Steinsdorfstrasse 10**
**D-80538 München (DE)**

## Description

The present invention relates to a data processor with a memory of the kind referred to in the preamble portion of patent claim 1. Such a data processor is known from US-A-39 84 670.

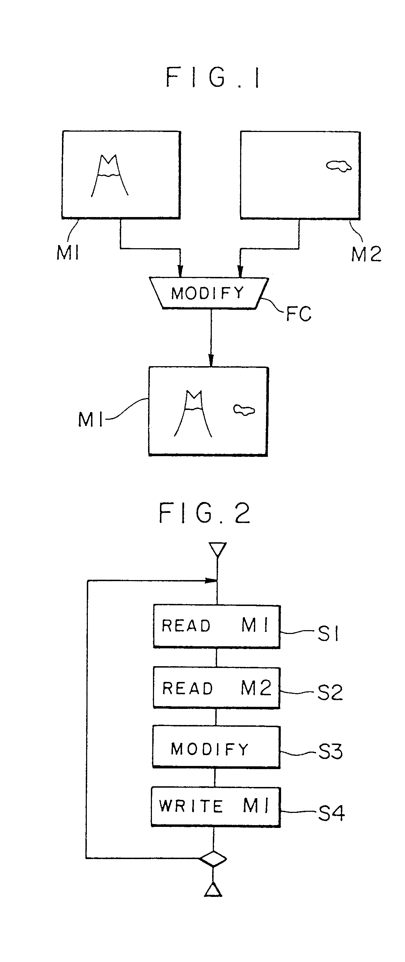

The prior art technique will be described by referring to graphic processing depicted as an example in Figs. 1-2. For example, the system of Fig. 1 comprises a graphic area M1 having a one-to-one correspondence with a cathode ray tube (CRT) screen, a store area M2 storing graphic data to be combined, and a modify section FC for combining the data in the graphic area M1 with the data in the store area M2. In Fig. 2, a processing flowchart includes a processing step S1 for reading data from the graphic area M1, a processing step S2 for reading data from the store area M2, a processing step S3 for combining the data read from the graphic area M1 and the data read from the store area M2, and a processing step for writing the composite data generated in the step S3 in the graphic area M1.

In the graphic processing example, the processing step S3 of Fig. 2 performs a logical OR operation only to combine the data of the graphic area M1 with that of the store are M2.

On the other hand, the graphic area M1 to be subjected to the graphic processing must have a large memory capacity ranging from 100 kilobytes to several megabytes in ordinary cases. Consequently, in a series of graphic processing shown in Fig. 2, the number of processing iterations to be executed is on the order of $10^6$ or greater even if the processing is conducted on each byte at a time.

Similarly referring to Figs. 2-3, a graphic processing will be described in which the areas M1 and M2 store multivalued data such as color data for which a pixel is represented by use of a plurality of bits.

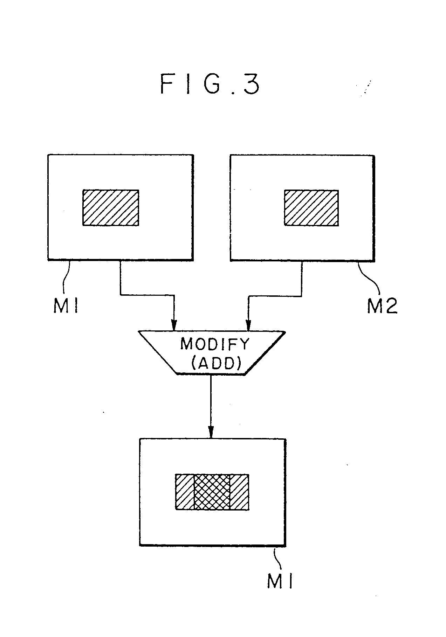

Referring now Fig. 3, a graphic processing arrangement comprises a memory area M1 storing the original multivalued graphic data and a memory area M2 containing multivalued graphic data to be combined.

For the processing of multivalued graphic data shown in Fig. 3, an addition is adopted as the operation to ordinarily generate a composit graphic data. As a result, the values of data in the overlapped portion become larger, and hence a thick picture is displayed as indicated by the crosshatch. In this case, the memory area must have a large memory capacity. The number of iterations of processing from the step S1 to the step S4 becomes on the order of $10^6$ or greater as depicted in Fig. 2. Due to the large iteration count, most portion of graphic data processing time is occupied by the processing time to be elapsed to process the loop of Fig. 2. In the graphic data processing, therefore, the period of time utilized for the memory access becomes greater than the time elapsed for the data processing. Among the steps S1-S4 of Fig. 2, three steps S1, S2, and S4 are associated with the memory access. As described above, in such a processing as an graphic data processing in which a memory having a large capacity is accessed, even if the operation speed is improved, the memory access time becomes a bottleneck of the processing, which restricts the processing speed and does not allow to improve the effective processing speed of the graphic data processing system.

In the prior art examples, the following disadvantages take place.

(1) In the graphic processing as shown by use of the flowchart of Fig. 2, most portion of processing is occupied by the steps S1, S2, and S4 which use the bus for memory read/write operations, consequently, the bus utilization ratio is increased and a higher load is imposed on the bus.

(2) The graphic processing time is further increased, for example, because the bus has a low transfer speed or the overhead becomes greater due to the operation such as the bus control to dedicatedly allocate the bus to the CRT display operation and to the memory access.

(3) Moreover, although the flowchart of Fig. 2 includes only four static processing steps, a quite large volume of data must be processed as described before. That is, the number of dynamic processing steps which may elapse the effective processing time becomes very large, and hence a considerably long processing time is necessary.

Consequently, it is desired to implement a graphic processing by use of a lower number of processing steps.

A memory circuit for executing the processing described above is found in the Japanese Patent Unexamined Publication No. 55-129387, for example.

US-A 39 84 670 discloses a LSI device comprising a memory, an arithmetic logic unit, an output register and circuit means for status signals of the device. On such a device according operations can be performed, namely writing or storing data in the memory, arithmetic operations in the arithmetic logic unit and to deliver status data of the device.

From US 39 76 982 an image manipulation apparatus is known, comprising memory means, means for extracting selectively addressed sequences from the memory, an information source, a logic means and control means, on which apparatus the operations of writing or storing, of reading and processing of particular information in the memory, of logically combining source and memory information can be performed.

## SUMMARY OF THE INVENTION

It is therefore an object of the present invention to provide a data processor with a memory using the same which enables a higher-speed execution of dyadic and arithmetic operations on graphic data and to provide a data processor with a memory circuit which enables easily to implement a priority processing to be effected when graphic are overlapped.

This object is accomplished by a data processor as claimed in claim 1.

Dependent claims are directed to features of embodiments of the invention as claimed in claim 1.

In accordance with the present invention there is provided a unit of memory elements which enables arbitrary operations to read, write and store data, characterized by including a control circuit which can operate in an ordinary write mode for storing in the memory element unit a first data supplied externally based on the first data and a second data in the memory element unit, a logic operation mode for storing an operation result obtained from a logic operation executed between the first and second data, and an arithmetic operation mode for storing in the memory element unit a result data obtained from an arithmetic operation executed between the first data and the second data.

## BRIEF DESCRIPTION OF THE DRAWINGS

Fig. 1 is a schematic diagram for explaining an operation to generate a composite graphic image in a graphic data processing system.

Fig. 2 is a flowchart of processing applied to the prior art technique to generate a composite graphic data.

Fig. 3 is a schematic block diagram for explaining a multivalued graphic data processing.

Fig. 4 is a timing chart illustrating the ordinary operation of a memory.

Fig. 5 is a block diagram illustrating a memory circuit of an embodiment of the present invention.

Fig. 6 is a table for explaining the operation modes of a control circuit.

Fig. 7 is a schematic diagram illustrating an example of the control circuit configuration.

Fig. 8 is a circuit block diagram depicting an example of a 4-bit operational memory configuration.

Figs. 9a to 9c are diagrams for explaining an application example of an embodiment.

Fig. 10 is a schematic diagram for explaining a processing to delete multivalued graphic data.

## DESCRIPTION OF THE PREFERRED EMBODIMENTS

Referring the accompanying drawings, the following paragraphs describe embodiments of the present invention in detail.

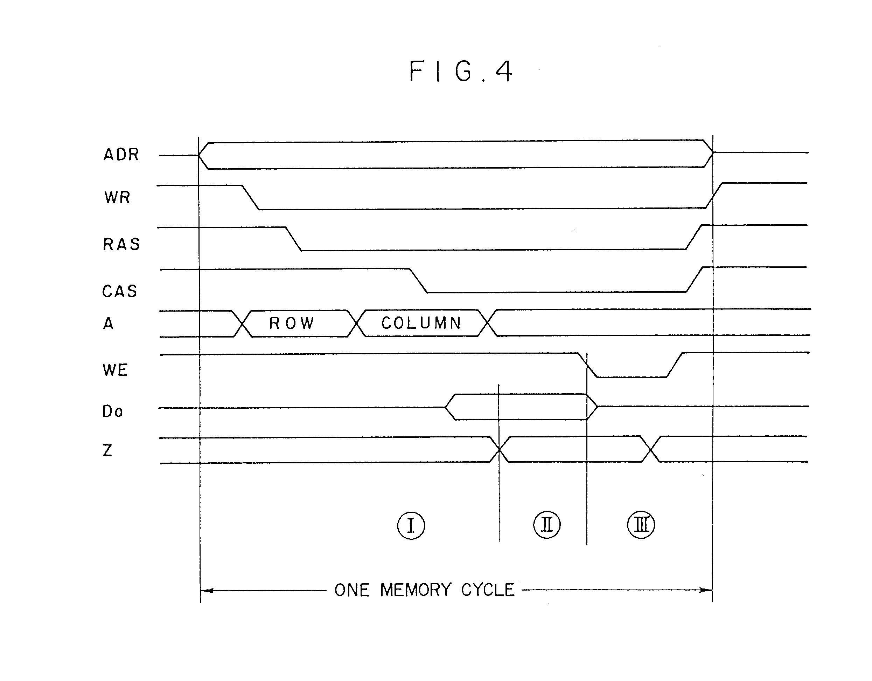

Fig. 4 is a timing chart of a DRAM. First, the operation to access the memory will be briefly described in conjunction with Fig. 4. In this timing chart, ADR is an address signal supplied from an external device and WR indicates a write request signal. These two signals (ADR and WR) are fed from a microprocessor, for example. In addition, RAS is a row address strobe signal, CAS is a column address strobe signal, A indicates an address signal representing a column or row address generated in the timesharing fashion, WE stands for a write enable signal, and Z is a data item supplied from an external device (microprocessor). Excepting the Z signal, they are control signals generated by a DRAM controller, for example. The memory access outlined in Fig. 4 can be sammarized as follows.

(i) As shown in Fig. 4, a memory access in a read/write cycle generally commences with a read cycle (①) and ends with a write cycle (Ⅲ) due to a write enable signal, WE.

(ii) Between the read cycle (①) and the write cycle (Ⅲ), there appears an interval (Ⅱ) in which a read data $D_0$ and an external data Z (to be written) exist simultaneously.

(iii) This interval (Ⅱ) is referred to as the operation enabled interval.

As described above, the store data $D_0$ and the external write data Z exist simultaneously in the interval Ⅱ. As a consequence, the store data $D_0$ and the external Z can be subjected to an operation during a memory cycle in this interval by use of the memory circuit having an operation function, thereby enabling the operation result to be written in the memory circuit.

Next, another embodiment will be described in which processing to generate a composite graphic data represented as the multivalued data of Fig. 3 is executed.

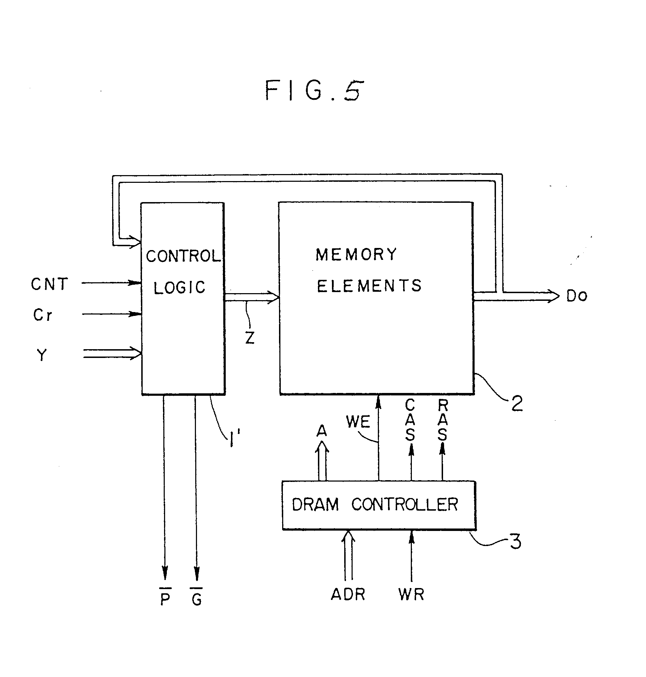

Fig. 5 is a circuit block diagram of a memory circuit applied to a case in which the multivalued data is processed.

The configuration of Fig. 5 is adopted because the processing to generate a composite graphic data from the multivalued data indispensably necessitates the arithmetic operation, not the simple logic operation.

In the following paragraphs, although the arithmetic operation is described, the circuit configuration includes the sections associated with the logic operation because the logic operation is also used for the multivalued graphic data processing. The circuit arrangement of Fig. 5 includes a control circuit 1', memory elements 2, a DRAM controller 3, external control signals CNT and Cr, a data Y supplied from an external device, a write data Z to the memory elements 2, a read data Do from the memory elements 2, and signals A, WE, CAS, RAS, ADR, and WR.

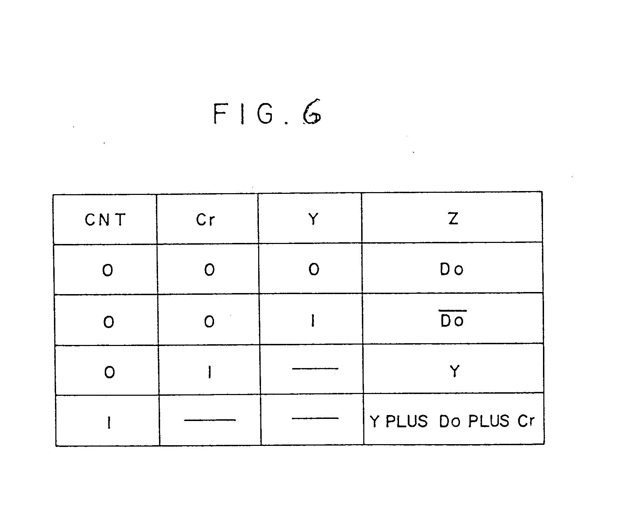

In the embodiment as shown in Fig: 5, the control circuit 1' performs an operation on the read data Do and the external data Y according to the external control signals CNT and Cr; and the operation result, write data Z is written in the memory elements 2. Fig. 6 is a table illustrating the control operation modes of the control circuit 1'. When the external control signals CNT and Cr are set to $\emptyset$, the control circuit 1' operates in a mode where the external data Y is used as a control signal to determine whether or not the read data Do is subjected to an inversion before it is outputted; when the signals CNT and Cr are set to 0 and 1, respectively, the control circuit 1' operates in a mode where the external data Y is outputted without change; and when the CNT signal is set to 1, the control circuit 1' operates in a mode where the read data Do, the external data Y, and the external control signal Cr are arithmetically added.

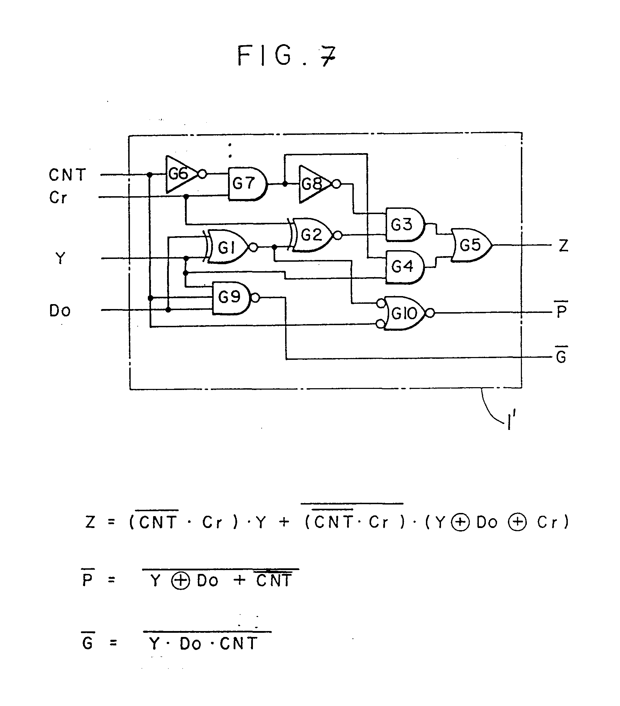

Fig. 7 is a concrete circuit diagram of a circuit implementing the control operation modes. In this circuit arrangement, the arithmetic operation is achieved by use of the ENOR gates G1 and G2, and the condition that the external control signals CNT and Cr are $\emptyset$ and 1, respectively is detected by the gates G6 to G8, and the output from the ENOR gate or the external data Y is selected by use of a selector constituted from the gates G3 to G5. This circuit configuration further includes a NAND gate G9 for outputting a generate signal associated with the carry lookahead function provided to minimize the propagation delay of the carry and an AND gate G10 for generating a propagate signal similarly associated with the carry lookahead function. The logical expressions of the output signals Z, P, and G from the control circuit 1' are as listed in Fig. 21, where the carry lookahead signals P and G each are set to fixed values ($\overline{P}$ = 0, $\overline{G}$ = 1) if the external control signal CNT is $\emptyset$.

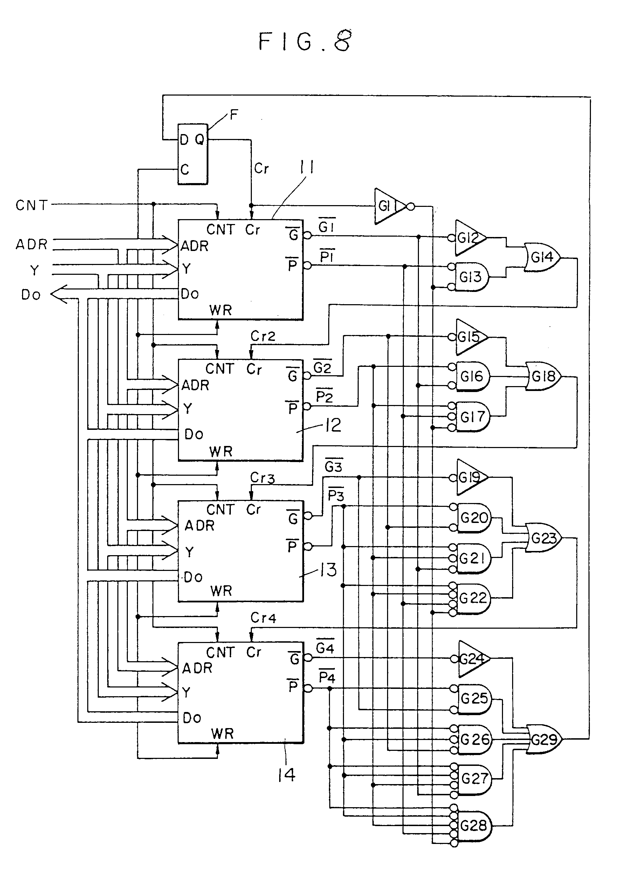

Fig. 8 is the configuration of a four-bit operation memory utilizing four memory circuits of the embodiment. For the simplification of explanation, only the sections primarily associated with the arithmetic operation mode are depicted in Fig. 8. The circuit diagram includes the memory circuits 11-14 shown in Fig. 5, gates G11 to G28 constituting a carry lookahead circuit for achieving a carry operation, and a register F for storing the result of a carry caused by an arithmetic operation. The memory circuits 11 and 14 are associated with the least- and most-significant bits, respectively.

Although not shown in this circuit configuration to simplify the circuit arrangement, the register F is connected to an external circuit which sets the content to $\emptyset$ or 1. The logical expression of the carry result, namely, the output from the gate G29 is as follows.

G4 + G3•P4 + G2•P3•P4 + G1•P2•P3•P4 + Cr•P1•P2•P3•P4

When the external control signal CNT is $\emptyset$, Pi and Gi are set to 1 and $\emptyset$, respectively (where, $\underline{i}$ indicates an integer ranging from one to four) , and hence the logical expression includes only the signal Cr, which means that the value of the register F is not changed by a write operation. Since the intermediate carry signals Gr2 to Gr4 are also set to the value of the signal Cr, three operation states are not changed by a write operation when the external control signal CNT is $\emptyset$. If the external control signal CNT is 1, the carry control signals $\overline{P1}$ to $\overline{P4}$ and $\overline{G1}$ to $\overline{G4}$ of the memory circuits 11 - 14, respectively function as the carry lookahead signals, so an ordinary addition can be conducted.

As shown in Fig. 6, although the control circuit has a small number of operation modes, the operation functions can be increased by selecting the logic value $\emptyset$, the logic value 1, the write data D to a microprocessor or the like, and the inverted data $\overline{D}$ of the write data D as the inputs of the external control signal Cr and the external data Y.

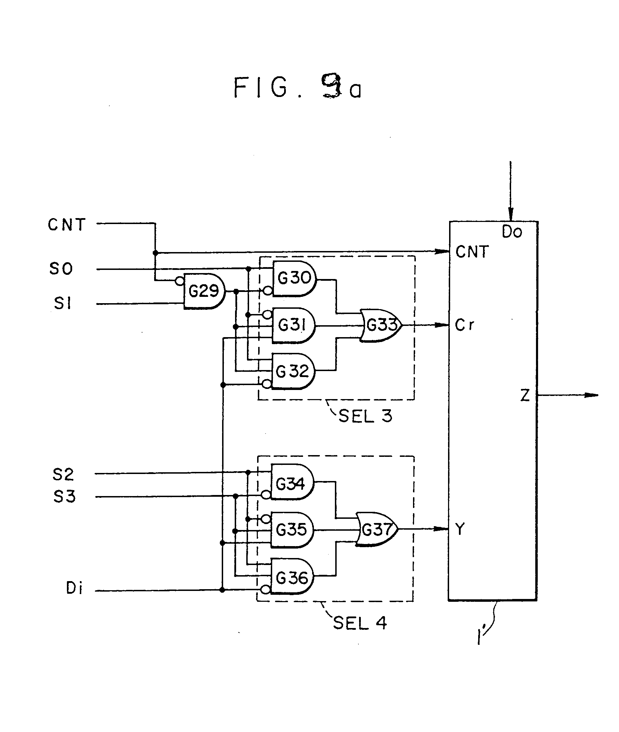

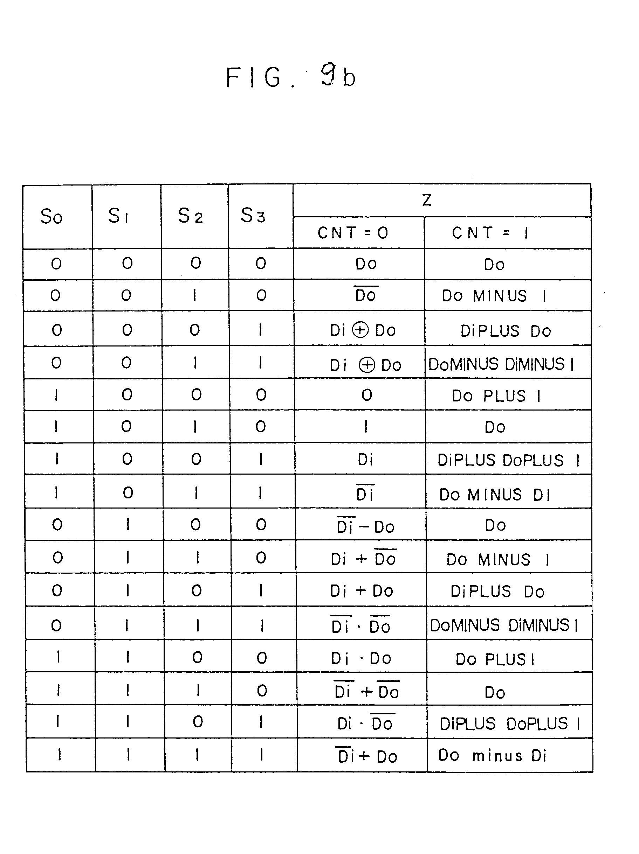

Figs. 9a to 9c illustrate an example in which above-mentioned circuits are combined. Fig. 9a is a concrete representation of a circuit for the least-significant bit, whereas Fig. 9b is a table outlining the operation functions of the circuit of Fig. 9a.

In the following paragraphs, the circuit operation will be described only in the arithmetic operation mode with the external control signal CNT set to 1.

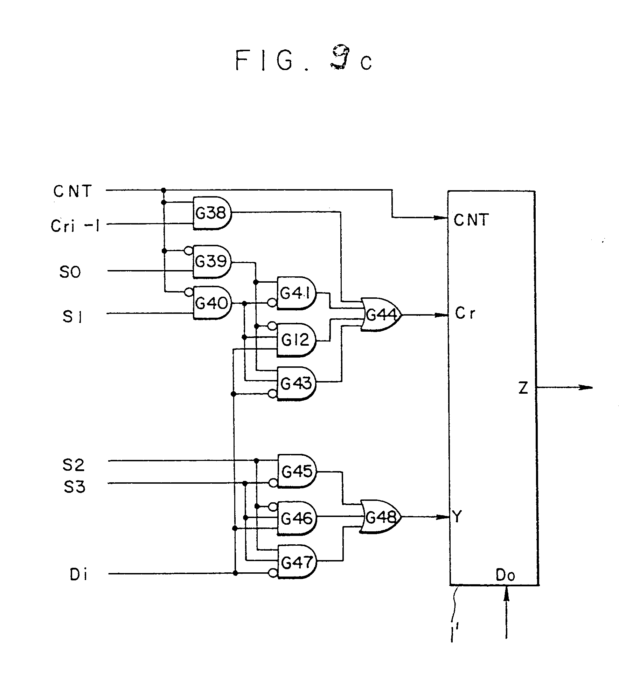

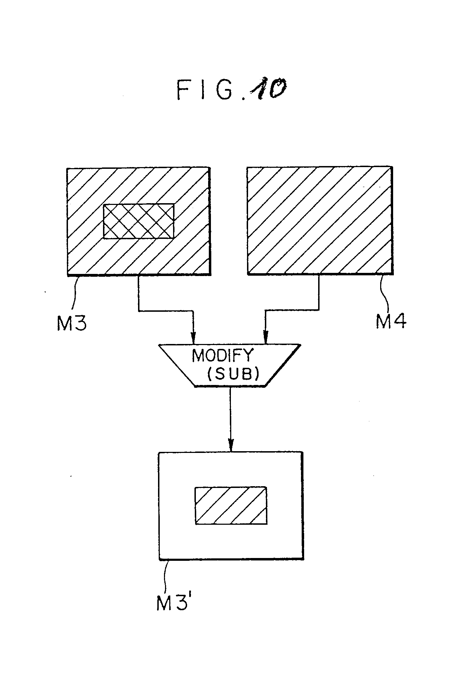

Gates G29 - G33 constitute a selector (SEL3) for the external control signal Cr, while gates G34 - G37 configure a selector (SEL4) for the external data Y. The circuit arrangement of Fig. 9a comprises select control signals S$\emptyset$ and S1 for selecting the external control signal Cr and select control signals S2 and S3 for selecting the external data Y. Fig. 9c depicts a circuit for the most-significant bit. This circuit is different from that of Fig. 9a in that the selector for the signal Cr is constituted from the gates G38 - G44 so that a carry signal Cri-1 from the lower-order bit is inputted to the external control signal Cr when the external control signal CNT is 1. The selector for the external data Y is of the same configuration of that of Fig. 9c. In the circuit configuration of Fig. 9c, the memory circuit arrangement enables to achieve 16 kinds of logical operations and six kinds of arithmetic operations by executing a memory write access. For example, the processing to overlap multivalued graphic data as shown in Fig. 3 is carried out as follows. First, the select signals S0 to S3 are set to 0, 0, 0, and 1, respectively and the write data Z is specified for an arithmetic operation of Do Plus 1. A data item is read from the multivalued graphic data memory M2 and the obtained data item is written in the destination multivalued graphic data area M1, which causes each data to be added and the multivalued graphic data items are overlapped at a higher speed. Similarly, if the select signals S∅ to S3 are set to 1 and the write data Z is specified for a subtraction of Do Minus Di, the unnecessary portion (such as the noise) of the multivalued graphic data can be deleted as depicted in Fig. 10. Like the case of the overlap processing, this processing can be implemented only by executing a read operation on the data memory M3 containing the data from which the unnecessary portion is subtracted and by repeating a write operation thereafter on the destination data memory M3', which enables a higher-speed graphic processing.

According to the present invention,

(1) The multivalued graphic data processing is effected by repeating a memory access two times, and hence the processing such as the graphic data overlap processing and subtraction can be achieved at a higher speed;

(2) Since the data operation conducted between memory units is implemented on the memory side, the multivalued graphic processing can be implemented not only in a device such as a microprocessor which has an operation function but also in a device such as a direct memory access (DMA) controller which has not an operation function; and

(3) The carry processing is conducted when a memory write access is executed by use of the circuit configuration as shown in Fig. 8, so the multiple-precision arithmetic operation can be implemented only by using a memory write operation, thereby enabling a multiple-precision arithmetic operation to be achieved at a higher speed.

As can be understood from the foregoing description, the present invention leads to an advantage that the dyadic operation and the arithmetic operation can be performed on the graphic data at a higher speed.

In accordance with the present invention, moreover, the priority processing to be utilized when graphic images overlap and the processing for the color data can be readily implemented.

**Claims**

1. A data processor with a memory on which can be performed:

   a write mode, in which first data (Y) from a data input line are stored in memory elements (2);

   a logic operation mode, in which a logical operation is performed on said first data (Y) from said data input line and second data (Do), which are stored in said memory elements (2), and in which logic operation mode the result of said logical operation (Z) is stored in said memory elements (2); and

   an arithmetic operation mode, in which an arithmetic operation is performed on said first data (Y) and said second data (Do), and in which arithmetic operation mode the result of said arithmetic operation (Z) is stored in said memory elements (2),

   **characterized** by

   a selector means (SEL4) for selecting said first data (Y) from input data (Di) according to first and second select signals (S2, S3), comprising three AND gates (G34-G36) and an OR gate (G37), which OR gate receives the output signals of said AND gates and outputs said first data (Y), wherein a first of said AND gates (G36) receives the inverted input data ($\overline{Di}$) and first and second select signals (S2, S3), a second of said AND gates (G35) receives said input data (Di), said second select signal (S3) and said inverted first select signal ($\overline{S2}$) and a third of said AND gates (G34) receives said first select signal (S2) and said inverted second select signal ($\overline{S3}$),

   a selector means (SEL3) for selecting a control signal (Cr) from said input data (Di) and control data (CNT) according to third and fourth select signals (S∅, S1), comprising three AND gates (G30-G32) and an OR gate (G33), which OR gate receives the output signals of said three AND gates and outputs said control signal (Cr), wherein a first of said AND gates (G32) receives the inverted input data ($\overline{Di}$), said third select signal (S∅) and said fourth select signal (S1), which is gated with the inverted control data ($\overline{CNT}$), a second of said AND gates (G31) receives said input data (Di), said inverted third select signal (So) and said fourth select signal (S1), which is gated with the inverted control data ($\overline{CNT}$), a third of said AND gates (G30) receives said third select signal (S∅) and said inverted fourth signal, which is gated with the inverted control data ($\overline{CNT}$), said control data determining said logic operation or said arithmetic operation,

   a control circuit (1'), which performs said writing operation, said logic operation and said arithmetic operation on said first data (Y) and said second data (Do) according to said control data (CNT) and said control signal (Cr), yielding said result (Z).

2. A data processor with a memory according to claim 1, wherein said first data (Y) and said second data (Do) are subjected to an exclusive OR operation as a logic operation in said logic operation mode.

3. A data processor with a memory according to claim 1, wherein one of said selector means (SEL3) has an additional input (Cri-1) for selecting a control signal (Cr) according to a carry signal from external devices.

4. A data processor with a memory according to claim 3, wherein said carry input signal (Cr) is identical to the control signal for discriminating said write mode from said logic operation mode.

**Patentansprüche**

1. Datenprozessor mit Speicher, auf dem durchführbar ist:
   ein Schreibmodus, in welchem erste Daten (Y) von einer Dateneingangsleitung in Speicherelementen (2) abgespeichert werden;
   ein Logikbetriebsmodus, in welchem eine logische Operation mit den besagten ersten Daten (Y) von der besagten Dateneingangsleitung und zweiten Daten (Do) durchgeführt wird, welche in den besagten Speicherelementen (2) abgespeichert sind, und in welchem Logik betriebsmodus das Ergebnis der besagten logischen Operation (Z) in den besagten Speicherelementen (2) abgespeichert wird; und
   ein Arithmetikbetriebsmodus, in welchem eine arithmetische Operation mit den besagten ersten Daten (Y) und den besagten zweiten Daten (Do) durchgeführt wird, und in welchem Arithmetikbetriebsmodus das Ergebnis der besagten arithmetischen Operation (Z) in den besagten Speicherelementen (2) abgespeichert wird,
   **gekennzeichnet durch**
   eine Wahlvorrichtung (SEL4) für die Auswahl der besagten ersten Daten (Y) unter den Eingangsdaten (Di) entsprechend den ersten und zweiten Auswahlsignalen (S2, S3), die drei UND-Gatter (G34-G36) und ein ODER-Gatter (G37) umfaßt, wobei das ODER-Gatter die Ausgangssignale der besagten UND-Gatter einliest und die besagten ersten Daten (Y) ausgibt, wobei ein erstes der besagten UND-Gatter (G36) die invertierten Eingangsdaten (Di) und die ersten und zweiten Auswahlsignale (S2, S3) einliest, ein zweites der besagten UND-Gatter (G35) die besagten Eingangsdaten (Di), besagtes zweites Auswahl signal (S3) und besagtes invertiertes erstes Auswahlsignal (S2) einliest, und ein drittes der besagten UND-Gatter (G34) das besagte erste Auswahlsignal (S2) und das besagte invertierte zweite Auswahlsignal (S3) einliest,
   eine Wahlvorrichtung (SEL3) für die Wahl eines Steuersignals (Cr) unter den besagten Eingangsdaten (Di) und Kontrolldaten (CNT) entsprechend dem dritten und vierten Auswahlsignal (S0, S1), umfassend drei UND-Gatter (G30-G32) und ein ODER-Gatter (G33), wobei das ODER-Gatter die Ausgangssignale der besagten drei UND-Gatter einliest und das besagte Steuersignal (Cr) ausgibt, wobei ein erstes der besagten UND-Gatter (G32) die invertierten Eingangsdaten (Di), das besagte dritte Auswahlsignal (S0) und das besagte vierte Auswahlsignal (S1) einliest, welches mit den invertierten Steuerdaten (CNT) gesteuert wird, ein zweites der besagten UND-Gatter (G31) die besagten Eingangsdaten (Di), das besagte invertierte dritte Auswahlsignal (S0) und besagte vierte Auswahlsignal (S1) empfängt, welches mit den invertierten Steuerdaten (CNT) gesteuert wird, ein drittes der besagten UND-Gatter (G30) das besagte dritte Auswahlsignal (S0) und das besagte invertierte vierte Signal einliest, welches mit den invertierten Steuerdaten (CNT) gesteuert wird, wobei die Steuerdaten die besagte Logikoperation oder besagte Arithmetikoperation festlegen,
   eine Steuerschaltung (1'), welche die besagte Schreiboperation, die besagte logische Operation und besagte arithmetische Operation mit den besagten ersten Daten (Y) und den besagten zweiten Daten (Do) entsprechend den besagten Steuerdaten (CNT) und besagtem Steuersignal (Cr) durchführt, was zu dem besagten Resultat (Z) führt.

2. Datenprozessor mit Speicher nach Anspruch 1, wobei die besagten ersten Daten (Y) und die besagten zweiten Daten (Do) einer Exklusiv-ODER-Operation als logischer Operation in dem besagten Logikbetriebsmodus unterworfen werden.

3. Datenprozessor mit Speicher nach Anspruch 1, wobei eine der besagten Wahlvorrichtungen (SEL3) einen zusätzlichen Eingang (Cri-1) für die Auswahl eines Steuersignals (Cr) entsprechend dem Übertragsignal von externen Einheiten hat.

4. Datenprozessor mit Speicher nach Anspruch 3, wobei das besagte Übertragseingangssignal (Cr) identisch mit dem Steuersignal für die Unterscheidung des besagten Schreibmodus von dem besagten Logikbetriebsmodus ist.

## Revendications

1. Processeur de données comportant une mémoire, dans laquelle peuvent être mis en oeuvre :

un mode d'enregistrement, dans lequel des premières données (Y) provenant d'une ligne d'entrée de données sont mémorisés dans des éléments de mémoire (2);

un mode d'opération logique, dans lequel une opération logique est appliquée auxdites premières données (Y) provenant de ladite ligne d'entrée de données, et à des secondes données (Do), qui sont mémorisées dans lesdits éléments de mémoire (2), mode d'opération logique dans lequel le résultat de ladite opération logique (Z) est mémorisé dans lesdits éléments de mémoire (2); et

un mode d'opération arithmétique, dans lequel une opération arithmétique est appliquée auxdites premières données (Y) et auxdites secondes données (Do), et dans lequel le résultat de ladite opération arithmétique (Z) est mémorisé dans lesdits éléments de mémoire (2),

caractérisé par

des moyens de sélection (SEL4) pour sélectionner lesdites premières données (Y) parmi des données d'entrée (Di) conformément à des premier et second signaux de sélection (S2, S3), comprenant trois portes ET (G34, G36) et une porte OU (G37), laquelle porte OU reçoit les signaux d'entrée desdites portes ET et délivre lesdites premières données (Y), une première desdites portes ET (G36) recevant les données d'entrée inversées ($\overline{Di}$) et les premier et second signaux de sélection (S2, S3), une seconde desdites portes ET (G35) recevant lesdites données d'entrée (Di), ledit second signal (S3) et ledit premier signal de sélection inversé ($\overline{S2}$), et une troisième desdites portes ET (G34) recevant ledit premier signal de sélection (S2) et ledit second signal de sélection inversé ($\overline{S3}$),

des moyens de sélection (SEL3) pour sélectionner un signal de commande (Cr) à partir desdites données d'entrée (Di) et des données de commande (CNT) conformément à des troisième et quatrième signaux de sélection (Sø, S1), comprenant trois portes ET (G30-G32) et une porte OU (G33), cette porte OU recevant les signaux de sortie desdites trois portes ET et délivrant ledit signal de commande (Cr), une première desdites portes ET (G32) recevant les données d'entrée inversées ($\overline{Di}$), ledit troisième signal de sélection (Sø) et ledit quatrième signal de sélection (S1), dont le transfert est commandé par lesdites données de commande inversées ($\overline{CNT}$), une seconde desdites portes ET (G31) recevant lesdites données d'entrée (Di), ledit troisième signal de sélection inversé (So) et ledit quatrième signal de sélection (S1), dont la transmission est commandée par les données de commande inversées ($\overline{CNT}$), une troisième desdites portes ET (G30) recevant ledit troisième signal de sélection (Sø) et ledit quatrième signal inversé, dont le transfert est commandé avec les données de commande inversées ($\overline{CNT}$), lesdites données de commande déterminant ladite opération logique ou ladite opération arithmétique,

un circuit de commande (1'), qui exécute ladite opération d'enregistrement, ladite opération logique et ladite opération arithmétique appliquées auxdites premières données (Y) et auxdites secondes données (Do) conformément auxdites données de commande (CNT) et audit signal de commande (Cr), et fournit ledit résultat (Z).

2. Processeur de données comportant une mémoire selon la revendication 1, dans lequel lesdites premières données (Y) et lesdites secondes données (Do) sont soumises à une opération OU-Exclusif en tant qu'opération logique dans ledit mode d'opération logique.

3. Processeur de données comportant une mémoire selon la revendication 1, dans lequel l'un desdits moyens de sélection (SEL3) possède une entrée supplémentaire (Cri-1) pour la sélection d'un signal de commande (Cr) en fonction d'un signal de report provenant de dispositifs externes.

4. Processeur de données comportant une mémoire selon la revendication 3, dans lequel ledit signal d'entrée de report (Cr) est identique au signal de commande pour discriminer ledit mode d'enregistrement par rapport audit mode d'opération logique.

FIG. 1

FIG. 2

# FIG.3

FIG. 4

FIG.5

# FIG. 6

| CNT | Cr | Y | Z |
|-----|-----|-----|-----|
| O | O | O | Do |
| O | O | I | $\overline{Do}$ |
| O | I | —— | Y |
| I | —— | —— | Y PLUS Do PLUS Cr |

# FIG. 7

$$Z = \overline{(\overline{CNT} \cdot Cr)} \cdot Y + \overline{\overline{(\overline{CNT} \cdot Cr)}} \cdot (Y \oplus Do \oplus Cr)$$

$$\overline{P} = \overline{Y \oplus Do + \overline{\overline{CNT}}}$$

$$\overline{G} = \overline{Y \cdot Do \cdot CNT}$$

13

F I G . 8

FIG. 9a

# FIG. 9b

| $S_o$ | $S_1$ | $S_2$ | $S_3$ | Z | |
| --- | --- | --- | --- | --- | --- |
| | | | | CNT = O | CNT = I |
| O | O | O | O | Do | Do |
| O | O | I | O | $\overline{Do}$ | Do MINUS I |
| O | O | O | I | Di $\oplus$ Do | DiPLUS Do |
| O | O | I | I | Di $\oplus$ Do | DoMINUS DiMINUS I |
| I | O | O | O | O | Do PLUS I |
| I | O | I | O | I | Do |
| I | O | O | I | Di | DiPLUS DoPLUS I |
| I | O | I | I | $\overline{Di}$ | Do MINUS DI |
| O | I | O | O | $\overline{Di} - Do$ | Do |
| O | I | I | O | Di $+ \overline{Do}$ | Do MINUS I |
| O | I | O | I | Di $+$ Do | DiPLUS Do |
| O | I | I | I | $\overline{Di} \cdot \overline{Do}$ | DoMINUS DiMINUS I |
| I | I | O | O | Di $\cdot$ Do | Do PLUS I |
| I | I | I | O | $\overline{Di} + \overline{Do}$ | Do |
| I | I | O | I | Di $\cdot \overline{Do}$ | DIPLUS DoPLUS I |
| I | I | I | I | $\overline{Di} + Do$ | Do minus Di |

# FIG. 9c

FIG.10

M3

M4

MODIFY
(SUB)

M3'